# EUROPÄISCHE PATENTSCHRIFT

(11) **EP 1 603 680 B1**
(45) Veröffentlichungstag und Bekanntmachung des Hinweises auf die Patenterteilung: **13.06.2012**
(21) Anmeldenummer: 03795738.8
(22) Anmeldetag: 01.12.2003
(51) Int. Cl.: B04B 5/08, B01D 53/24

(54) **VERFAHREN ZUR TRENNUNG VON GASGEMISCHEN**
METHOD FOR SEPARATING GAS MIXTURES
PROCEDE DE SEPARATION DE MELANGES GAZEUX

(30) Priorität: 02.12.2002 DE 10256369
(43) Veröffentlichungstag der Anmeldung: 14.12.2005
(73) Patentinhaber: Rerum Cognitio Forschungszentrum GMBH, 60598 Frankfurt am Main (DE)
(72) Erfinder:
(86) Internationale Anmeldenummer: PCT/DE2003/003968
(87) Internationale Veröffentlichungsnummer: WO 2004/050255

(56) Entgegenhaltungen:
- DE-A- 10 015 546
- US-A- 1 061 656

## Beschreibung

Die Erfindung betrifft ein Verfahren zur Trennung von Gasgemischen mittels Gaszentrifuge, bei welcher ein kompressibles Arbeitsfluid in einem doppelwandigen Rotor eingeleitet wird, das sich in Folge der wirksamen Zentrifugalkräfte verdichtet und dichteabhängig entmischt. Eine derartige technische Lösung wird in der Gasaufbereitungstechnik benötigt.

Eine dem Erfindungsgegenstand nahe liegende technische Lösung wird in der DE 100 15 546 A1 und im Dokument US-A-1 061 656 bekannt gemacht. Die dort beschriebenen Gaszentrifugen bestehen aus doppelwandigen Rotoren mit Kompressionsbereich, Achsfemenbereich und Entspannungsbereich. Die Ableitung der schwereren und leichteren Gasfraktionen erfolgt durch feststehende Systeme. Der Mangel der bekannten technischen Lösungen besteht darin, dass Turbulenzen an den Ableitungssystemen die Trennung erschweren und gleichzeitig den Energiebedarf erhöhen.

Die Aufgabe der Erfindung besteht deshalb im Schaffen einer technischen Lösung, mit deren Hilfe die Mängel des bekannten Standes der Technik überwunden werden können. In erster Linie geht es um die Verbesserung des Wirkungsgrades der Gastrennung, wobei diese einstufig erfolgen soll. Unter Vernachlässigung von Verlusten infolge äußerer Reibung soll der Energieaufwand für die Entmischung des Arbeitsfluids durch Verminderung innerer Turbulenzen gesenkt werden. Der energetische Aufwand für die Beschleunigung des Arbeitsfluids soll durch die Abbremsung desselben gesenkt werden.

Die Aufgabe wird erfindungsgemäß durch die Merkmale der Ansprüche 1 und 2 gelöst. Vom Grundsatz her wird unter Vernachlässigung der äußeren Reibung der Energleaufwand für die Entmischung des Gasgemisches reduziert, da der Energiebetrag für die Beschleunigung bei konstantem Massenstrom dem Betrag für die Abbremsung entgegensteht und somit kompensiert.

Dazu sieht die erfindungsgemäße Lösung vor, das Arbeitsfluid nach Eintritt in die Doppelwand eines Zentrifugenrotors so zu kanalisieren, dass bei minimalen Strömungswiderständen und mitrotierender Trennschwelle die an der Außenwand anliegenden schwereren Moleküle ohne zusätzliche Turbulenzen durch stehende Trennsysteme zu separieren, um diese getrennt abzuführen.

Die Vorteile der Erfindung bestehen zusammengefasst in der nun bestehenden Möglichkeit eine Gaszentrifuge an sich bekannter Bauart durch das vorgeschlagene Verfahren und den damit verbundenen konstruktiven Veränderungen für die Trennung unterschiedlich dichter Bestandteile eines Gasgemisches in einer Trennstufe zu nutzen. Durch Vermeidung unnötiger Turbulenzen beim Trennen sowie die Rückgewinnung der Beschleunigerleistung durchs Abbremsen des rotierenden Arbeitsfluidstromes wird ein besonders energieeffizienter Betrieb der Gaszentrifuge erreicht.

Die Erfindung soll nachstehend mit Ausführungsbeispielen näher erläutert werden. In der beigefügten Zeichnung zeigen:
- Fig. 1: einen schematischen Längsschnitt durch eine Gaszentrifuge für die Trennung von Gasgemischen mit konstanter Ausgestaltung der Strömungskanäle gemäß der Erfindung;
- Fig. 2: einen schematischen Querschnitt durch den Zentrifugenrotor
- Fig.3: einen schematischen Längsschnitt durch eine Gaszentrifuge für die Trennung von Gasgemischen mit konischer Ausgestaltung der Strömungskanäle;

### Ausführungsbeispiel 1:

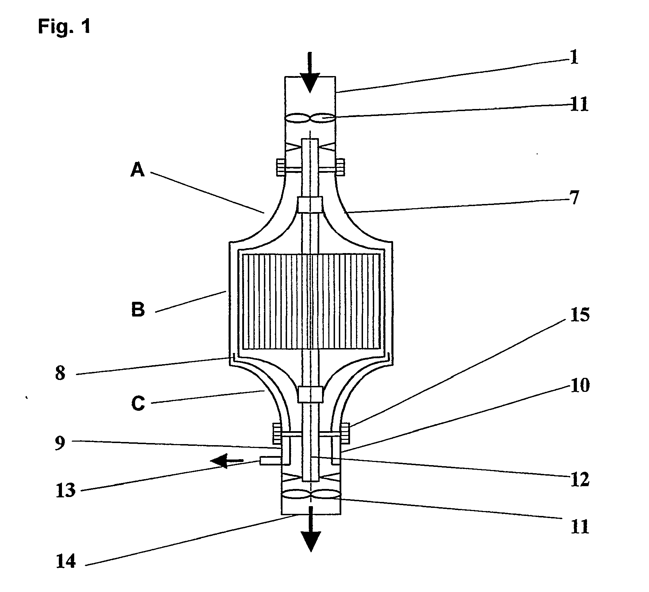

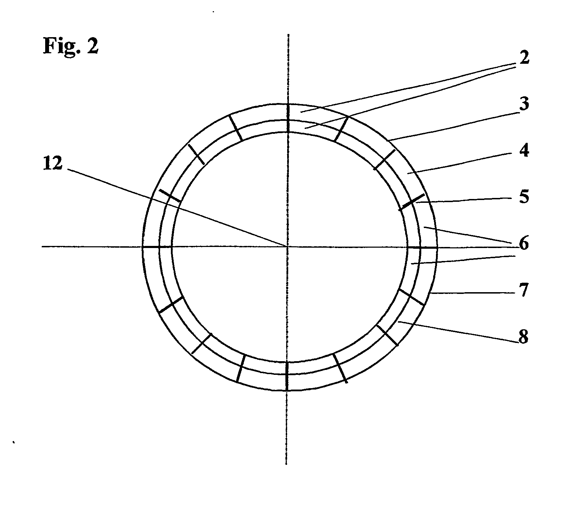

Gemäß der Figuren 1 und 2 wird eine Gaszentrifuge zur Trennung von Gasgemischen eingesetzt. Die eigentliche Gaszentrifuge besteht dabei aus einem zentralen Zuführungsrohr 1 für das Arbeitsfluid und dem zentralen Abführungsrohr 10, das in erster Linie als Abführung 14 für die leichtere Gasfraktion dient. Der zwischen den Zuführungs- und Abführungsrohren angeordnete doppelwandige Zentrifugenrotor 3 ist mit den Zu- und Abführungsrohren 1, 10 gasdicht verbunden. Zwischen den Zu- und Abführungsrohren 1 und 10 ist der doppelwandige Zentrifugenrotor 3 angeordnet, wobei die Verbindungen zu den feststehenden Zu- und Abführungsrohren 1, 10 durch Labyrinthdichtungen 15 komplettiert sind. In den Zu- und Abführungsrohren 1 und 10 ist die feststehende Achse des Stators des elektromotorischen Antriebs der Gaszentrifuge positioniert. Diese Achse bildet auch die Achse 12 des Zentrifugenrotors 3.

Auf der Achse des Stators ist der doppelwandige Zentrifugenrotor 3 zweifach gelagert. Der doppelwandige Zentrifugenrotor 3 ist dabei als Außenläufer des elektromotorischen Antriebs der Gaszentrifuge ausgebildet. In den Zu- und Abführungsrohren 1, 10 sind Axialgebläse 11 für den Transport des Arbeitsfluids durch die Gaszentrifuge angeordnet. Zwischen dem Innenmantel und dem Außenmantel 7 des doppelwandigen Zentrifugenrotors 3 ist der Mantelraum 2 angeordnet, der für die Durchströmung des doppelwandigen Zentrifugenrotors 3 durch das Arbeitsfluid zur Verfügung steht. Der Strömungsquerschnitt 4 des Mantelraumes 2 ist in jeder quer zur Achse 12 des Zentrifugenrotors 3 angeordneten Ebene konstant und damit massestromproportional ausgebildet. Im Mantelraum 2 sind achsparallele Stege 5 angeordnet, zwischen denen durchgängige Strömungskanäle 6 für das Arbeitsfluid gebildet sind. In Strömungsrichtung gesehen ist vor dem Übergang vom achsfernen Bereich B in den Entspannungsbereich C eine konzentrisch ausgebildete Trennschwelle 8 angeordnet. Das zentrale Abführungsrohr 10 enthält im äußeren Bereich einen Ringkanal 9 zur Aufnahme und Abführung der an der Trennschwelle 8 gewonnenen Gasfraktion mit höherer Dichte. Von diesem Ringkanal 9 kann diese Gasfraktion über den Entnahmestutzen 13 der Gaszentrifuge entnommen werden.

Das Arbeitsfluid gelangt durch das zentrale Zuführungsrohr 1 in den Mantelraum 2 des doppelwandigen Zentrifugenrotors 3. Dort wird das Arbeitsfluid bis zum Erreichen der achsfernen Lage in Strömungskanälen 6 zwischen den achsparallelen Stegen 5 geführt.

In Folge Beschleunigung der Gasmoleküle auf einer Kreisbahn wirken die massebezogenen Zentrifugalkräfte unterschiedlich stark auf die Einzelgasmoleküle, wodurch es zu einer Entmischung und schichtweisen Anordnung der unterschiedlichen Gasmoleküle im Strömungsquerschnitt kommt.

Die Verdichtung des Arbeitsfluids erreicht Werte von über 2,0 bar, wenn der doppelwandige Zentrifugenrotor 3 mit einem Radius von wenigstens 0,5 m ausgestattet ist und mit einer Drehzahl von etwa 8000 1/Min betrieben wird. Diese Veränderung der Parameter des Arbeitsfluid findet im Kompressionsbereich A statt. Im achsfernen Bereich B des doppelwandigen Zentrifugenrotors 3 strömt das Arbeitsfluid im Strömungskanal 6 am Außenmantel 7 entlang, wobei eine möglichst laminare Strömung des Arbeitsfluids in den zwischen den achsparallelen Stegen 5 gebildeten Strömungskanälen 6 erreicht werden soll. Das erhöht die Möglichkeit des Verbleibens der spezifisch dichteren Teile des Arbeitsfluids am Außenmantel 7 des doppelwandigen Zentrifugenrotors 3. Vor dem Übergang des achsfernen Bereichs B in den Entspannungsbereich C ist in der Nähe des Außenmantels in Abhängigkeit der Einzelgasvolumenanteile die Trennschwelle 8 angeordnet, die das wenigstens teilweise entmischte Arbeitsfluid in eine Gasfraktion mit spezifisch höherer Dichte und in eine Gasfraktion mit spezifisch geringerer Dichte trennt. Im Ausführungsbeispiel enthält die Gasfraktion mit spezifisch höherer Dichte größere Anteile an molekularem Sauerstoff. Die Gasfraktion mit spezifisch geringerer Dichte enthält größere Anteile an molekularem Stickstoff als das unentmischte Arbeitsfluid.

In Folge der Entspannung der im Entspannungsbereich C geführten Gasfraktionen des Arbeitsfluids kann die benötigte Antriebsenergie auf ein Minimum reduziert werden.

Das zentrale Abführungsrohr 10 enthält einen Ringkanal 9, in den die gewonnene Gasfraktion mit spezifisch höherer Dichte eingeleitet wird. An diesen Ringkanal 9 ist der Entnahmestutzen 13 für die sauerstoffreiche Komponente des Arbeitsfluids angeordnet. Dagegen wird an der Abführung 14 für die spezifisch leichtere Gasfraktion eine stickstoffreiche Komponente gewonnen.

### Ausführungsbeispiel 2:

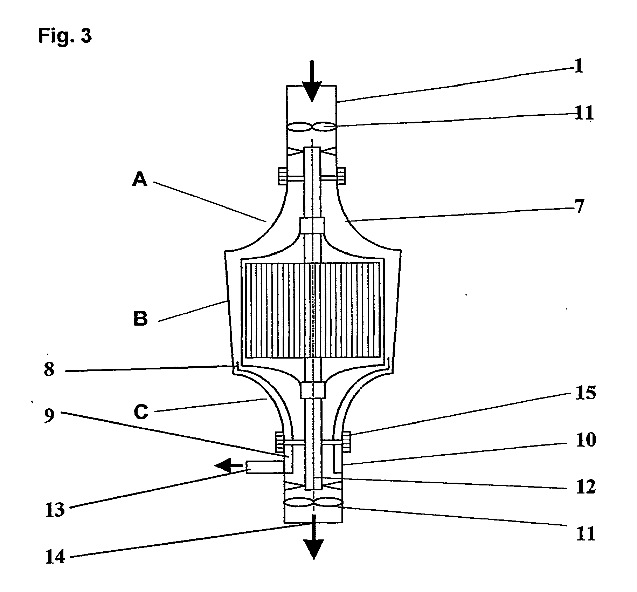

Gemäß der Figuren 2 und 3 ist eine Gaszentrifuge wie im Beispiel 1 ausgeführt.

Anders als im erfindungsgemäßen Beispiel 1 sind die Strömungsquerschnitte sowohl im Kompressionsbereich A als auch im achsfernen Bereich B und im Entspannungsbereich C nicht massestromproportional sondern volumenstrom- bzw. gegenläufig druckproportional ausgebildet. Im Kompressionsbereich A führt dies bei stetiger Zunahme des Drucks des unter der Wirkung der Zentrifugalkräfte stehenden Arbeitsfluids zu einer stetigen Verkleinerung der Strömungsquerschnitte bis zum Erreichen des achsfernen Bereichs B. Im achsfernen Bereich B kommt es in Folge zunehmender Entmischung des Arbeitsfluids zu einer weiteren geringfügigen Erhöhung der auf die schweren Gasmolekühle wirkenden Zentrifugalkräfte und damit des Drucks des Arbeitsfluids und somit auch zu einer Verkleinerung des Volumenstroms. Dem wird durch eine Verringerung des Strömungsquerschnittes bis zum Beginn des Entspannungsbereichs C Rechnung getragen.

Am Ende des achsfernen Bereiches wird das teilweise entmischte Arbeitsfluid an einer Trennschwelle 8 in zwei Gasfraktionen unterschiedlicher Dichte getrennt und im Entspannungsbereich C entspannt.

Durch die Anpassung der Strömungsquerschnitte an den jeweiligen tatsächlichen Volumenstrom kommt es zu einer beachtlichen Einschränkung von Turbulenzen und damit zu einer wirksameren Schichtung der unterschiedlich dichten Anteile des Arbeitsfluids.

### Bezugszeichenliste

- 1: zentrales Zuführungsrohr
- 2: Mantelraum
- 3: doppelwandiger Zentrifugenrotor
- 4: Strömungsquerschnitt
- 5: achsparallele Stege
- 6: Strömungskanäle
- 7: Außenmantel
- 8: Trennschwelle
- 9: Ringkanal im zentralen Abführungsrohr
- 10: zentrales Abführungsrohr
- 11: Axialgebläse
- 12: Achse des Zentrifugenrotors
- 13: Entnahmestutzen für die schweren Gasfraktion
- 14: Abführung der leichten Gasfraktion
- 15: Labyrinthdichtung
- A: Kompressionsbereich
- B: achsferner Bereich
- C: Entspannungsbereich

## Patentansprüche

1. Verfahren zur Trennung von Gasgemischen mittels Gaszentrifuge, bei welcher ein kompressibles Arbeitsfluid in einem doppelwandigen Rotor eingeleitet wird, in dem sich in Folge der wirksamen Zentrifugalkräfte das Arbeitsfluid verdichtet und entmischt, wobei zugleich eine Anreicherung der im Gasgemisch enthaltenen Gasmoleküle mit höherem Molekulargewicht entlang der Außenwand des Rotors erreicht wird und eine getrennte Abführung von Teilen des Arbeitsfluids mit jeweils unterschiedlichen Gehalten der im Gasgemisch enthaltenen Bestandteilen ermöglicht wird, **dadurch gekennzeichnet, dass** das Arbeitsfluid aus einem axialen zentralen Zuführungsrohr (1) in den sich erweiternden Mantelraum (2) des Kompressionsbereiches (A) eines doppelwandigen sich drehenden Zentrifugenrotors (3) strömt, wobei es im Kompressionsbereich (A) durch die Strömungskanäle (6) auf einer Kreisbahn mit wachsendem axialen Abstand bis zu einem kreisringförmigen Strömungsquerschnitt (4) formgebunden zwangsgeführt wird,
dass im zentrifugierten Zustand an einer von Einzelgasanteilen abhängigen mitrotierenden Trennschwelle (8) der Gasstrom in eine spezifisch schwerere und in eine spezifisch leichtere Gasfraktion getrennt wird,
dass in Strömungsrichtung gesehen, vor dem Übergang des achsfernen Bereichs (B) in den Entspannungsbereich (C) die getrennten Gasfraktionen separat mit abnehmenden axialen Abstand in den Strömungskanälen (6) zwangsgeführt, abgebremst und abgeleitet werden und
dass die Beschleunigung der Gasmoleküle im Kompressionsbereich (A) und das Abbremsen der Gasfraktionen im Entspannungsbereich (C) massenproportional erfolgen.

2. Verfahren zur Trennung von Gasgemischen mittels Gaszentrifuge nach Anspruch 1, **dadurch gekennzeichnet,**
**dass** die beim Durchströmen der gesamten Zentrifuge entstehenden Druckverluste mittels Axialgebläse (11) im zentralen Zuführungsrohr (1) und/oder im zentralen Abführungsrohr (10) überwunden werden,
**dass** die das Gasgemisch führenden zentralen Zu- und Abführungsrohre (1,10) mit dem Zentrifugenrotor (3) durch Labyrinthdichtungen (15) berührungsfrei verbunden sind.

## Claims

1. Method for the separation of gaseous mixtures using a gas centrifuge with which a compressible working fluid is introduced into a two-walled rotor in which due to the effective centrifugal forces condenses and de-mixes the working fluid, wherein there is simultaneously an enrichment of the gas molecules contained in the gaseous mixture with a higher molecular weight along the external wall of the rotor and it is possible to deviate portions of the working fluid separately with the respective separate contents of the components included in the gas mixture, **characterized by** the fact that the working fluid flows from an axially central supply tube (1) into the expanding sheathing area (2) of the compression area (A) of a two-walled, rotating centrifuge rotor (3), wherein, in the compression area (A), it is forced through the flow ducts (6) in a feeder line with a growing axial distance up to a circular-ringshaped flow cross-section in an intrinsic manner
in such a way that on a separating threshold (8) which rotates in dependence on one of the individual gas components in a centrifuged state, the gas flow is separated into a specifically heavier and a specifically lighter gas fraction;
in such a way that, from the perspective of the flow direction, before the transition of the axle-remote area (B) into the depressurising area (C), the separated gas fractions are forced separately with a decreasing axial distance in the flow canals (6), decelerated and
in such a way that the acceleration of the gas molecules in the compression area (A) and the deceleration of the gas fractions in the depressurisation area (C) is proportional by mass.

2. Method for the separation of gas mixtures using a gas centrifuge following claim 1, **characterized by** the fact that the resulting pressure losses resulting upon flowing through the entire centrifuge are overcome through an axial fan (11) in the central guide tube (1) and/or in the central discharge tube (10) in such a way that the central supply and discharge tubes (1,10) guiding the gas mixture with the centrifugal rotor (3) through the labyrinth gaskets are connected in a non-contacting manner.

## Revendications

1. Procédé destiné à séparer des mélanges gazeux au moyen d'une centrifugeuse à gaz, dans laquelle un fluide de travail compressible est introduit dans un rotor à double paroi, dans lequel, par suite de la mise en action de forces centrifuges, le fluide de travail sera comprimé et séparé, moyennant quoi, on obtient, dans le même temps, le long de la paroi extérieure du rotor, un enrichissement des molécules des gaz contenus dans le mélange gazeux, avec un poids moléculaire plus élevé et il est possible d'avoir une évacuation séparée des éléments du fluide de travail avec des contenus à chaque fois différents des constituants contenus dans le mélange gazeux, **caractérisé par le fait que** le fluide de travail se déplace depuis un tube d'amenée central et axial (1) pour rejoindre un espace d'enveloppe (2) de la zone de compression (A) d'un rotor centrifuge rotatif et à double paroi (3), moyennant quoi il se produit, en fonction de la forme, un guidage forcé dans la zone de compression (A) au travers de canaux de transport (6) dans un circuit avec augmentation de l'écartement axial jusqu'à une section de passage ayant la forme d'un anneau circulaire (4),
que le flux de gaz, en état centrifugé, sous l'effet d'un seuil de coupure, tournant en même temps et dépendant des différents gaz, sera séparé en une fraction gazeuse spécifiquement plus lourde et une fraction gazeuse plus légère,
que les fractions de gaz séparées, perçues dans la direction du flux, avant le franchissement de la zone à distance de l'axe (B) dans la zone de décompression (C), seront, avec un écartement axial décroissant, guidées par force, ralenties et évacuées dans les canaux de transport (6) et
que l'accélération des molécules de gaz dans la zone de compression (A) et le ralentissement des fractions de gaz dans la zone de décompression (C) se déroulent proportionnellement à la masse.

2. Procédé destiné à séparer des mélanges gazeux au moyen d'une centrifugeuse selon le droit revendiqué 1, **caractérisé par le fait que** les pertes de pression générées durant l'écoulement de la totalité de la centrifugeuse sont compensées au moyen d'une soufflante axiale (11) dans le tube d'amenée central (1) et / ou dans le tube d'évacuation central (10),
que les tubes centraux d'amenée et évacuation (1, 10) qui transportent le mélange gazeux, sont reliés au rotor centrifugeur, sans contact, au moyen de joints labyrinthe
